# EUROPEAN PATENT APPLICATION

(11) **EP 1 524 805 A2**
(43) Date of publication of application: **20.04.2005**
(21) Application number: 04024783.5
(22) Date of filing: 18.10.2004
(51) Int. Cl.: H04L 12/56

(54) **Method and system for discovering a mobility anchor point and managing mobility of a mobile node in a mobile IP network**

(30) Priority: 18.10.2003 KR 2003072807; 14.01.2004 KR 2004002767
(71) Applicant: Samsung Electronics Co., Ltd., Suwon-si, Gyeonggi-do (KR)
(72) Inventor: Park, Young-Jun, Samsung Electronics Co., Ltd., Suwon-si, Gyeonggi-do (KR); Suh, Kyung-Joo, Samsung Electronics Co., Ltd., Suwon-si, Gyeonggi-do (KR); Oh, Jae-Kwon, Samsung Electronics Co., Ltd., Suwon-si, Gyeonggi-do (KR); Bae, Eun-Hui, Samsung Electronics Co., Ltd., Suwon-si, Gyeonggi-do (KR); Lee, Hyeon-Woo, Samsung Electronics Co., Ltd., Suwon-si, Gyeonggi-do (KR)
(74) Representative: Grünecker, Kinkeldey, Stockmair & Schwanhäusser Anwaltssozietät

(57) **Abstract**

In a network system including at least one mobility anchor point (MAP) for managing mobility of a mobile node (MN) and a plurality of routers connected to the at least one MAP in a hierarchical structure, the MAP sends a MAP option to at least one router located on a higher level than the MAP. When receiving the MAP option, the router located on the higher level sends an updated MAP option to neighboring routers, after incrementing a predetermined upward value comprised in the MAP option. MAPs distributed in the network system can deliver MAP options regardless of the hierarchical structure of routers, and hence the MN can maximize its location privacy. Because the MAP performs MAP domain announcement using a DOMAIN option, service use of routers outside the MAP domain can be limited, and the number of times that a MAP is changed can be reduced.

## Description

### BACKGROUND OF THE INVENTION

### 1. Field of the Invention

The present invention relates generally to a system and method for managing the mobility of a mobile node (MN) in a network system, and more particularly to a mobility anchor point (MAP) discovery method and system that can extend a service area of a MAP on the basis of mobile Internet protocol version 6 (MIPv6) and maximize location privacy in MLPv6, and a system and method for managing the mobility of an MN using the same.

### 2. Description of the Related Art

The number of Internet users has largely increased in proportion to the performance improvement of mobile nodes (MNs) such as portable computers and personal digital assistants (PDAs) and the development of wireless communication technology.

Internet protocol (IP) addresses in an Internet address system include a network identifier field and a host identifier field. The network identifier field is used to identify a network, and the host identifier field is used to identify a host within a single network. When an MN moves from one network to another, a network identifier is changed and the IP address of the MN is changed. Because packets in an IP layer are routed according to the network identifier of a destination address, the MN cannot receive any packets when it moves from one network to another.

Therefore, if the MN desires to continuously perform communication in another network, its IP address must be changed such that the MN can have a new network identifier within the new network. When the IP address is changed, a higher-layer connection such as a transmission control protocol (TCP) connection is not ensured. Accordingly, a mobile IP is used for ensuring the mobility of the MN such that communication is enabled while an existing IP address is maintained in a foreign network.

Because the existing IPv4 address system cannot provide the increased number of IP addresses as the number of wireless Internet users is increasing, a large amount research is being performed on mobile Internet based on MIPv6 to provide mobility using the IPv6 protocol, which is currently recognized as the next generation Internet protocol. More specifically, MIPv6 ensures IP address mobility by means of a method for registering IP addresses newly formed for a home agent (HA) located in a home network of an MN whenever the MN moves from one link to another and for a correspondent node (CN) currently performing communication.

In the MIPv6, when moving from one home network to a foreign network, an MN obtains a care-of address (CoA) from an agent of a subnet in which the MN is currently located. Further, when moving from one subnet to another, the MN also obtains a new CoA from a new subnet. The MN binds a home address and the CoA, and registers the bound addresses to the HA of the home network and correspondent nodes (CNs) communicating with the MN.

The CNs set a destination of a packet to be transferred to the MN to the CoA, and transfer the packet to the MN, respectively. The HA of the home network intercepts the packet to be transferred to the MN using an original home address serving as a destination and tunnels the packet to the MN. Increases in geographical distance or topological distance between the MN and HA, or CNs result in increases of the time period for binding updates.

Packets to be transferred to the MN for the time period required for binding updates may be lost in an access router (AR) previously connected to the MN. To address this problem, a concept of localized mobility management (LMM) has been introduced. LMM is a method capable of routing a packet to the MN without influencing the bound addresses registered to the HA or CNs, even though the MN moves to a new subnet. In this method, the MN can move to a new location in a state in which the MN's IP address as viewed by the HA or CNs of the MN is not changed.

An example of technology capable of providing LMM is hierarchical MIPv6 (HMIPv6). HMIPv6 provides LMM using the hierarchical structure of routers. That is, HMlFv6 uses a mobility anchor point (MAP) serving as a localized mobility agent. For example, the MAP can be located in a router within a domain that the MN visits, and can be located in any level router among routers with the hierarchical structure.

The MAP intercepts all packets to be transferred to the MN registered thereto and immediately tunnels the packets to an on-link CoA (LCoA) formed on the basis of access router information of the MN. When moving to a new MAP domain, the MN binds a regional CoA (RCoA) formed from a new MAP and its own home address and registers the bound addresses to the CNs or HA. However, when moving within the MAP domain, the MN performs a binding update of the RCoA and LCoA only to the MAP, rather than to the CNs or HA.

When data to be transferred from the MN is present after the biding registration, the MN transfers a packet to the MAP. Accordingly, the MAP changes a source IP address of the packet transferred from the MN into an RCoA and sends the packet to a foreign terminal or node. Therefore, because the foreign node determines that the MN has the RCoA, it cannot recognize an actual address of the MN. This is referred to as location privacy.

When sending data to the MN, the foreign node sends the packet to the RCoA serving as the destination IP address. The MAP intercepts the packet to be transferred and sends the intercepted packet to the MN. At this time, the MN also has the RCoA in the viewpoint of the foreign node.

Because the packet sent from the foreign node is received by the MAP, mobility can be ensured even when a local binding update is performed to only the MAP, rather than the HA or CN, even though the MN moves to an AR before the MAP is changed in a state in which the MN has been registered to the MAP.

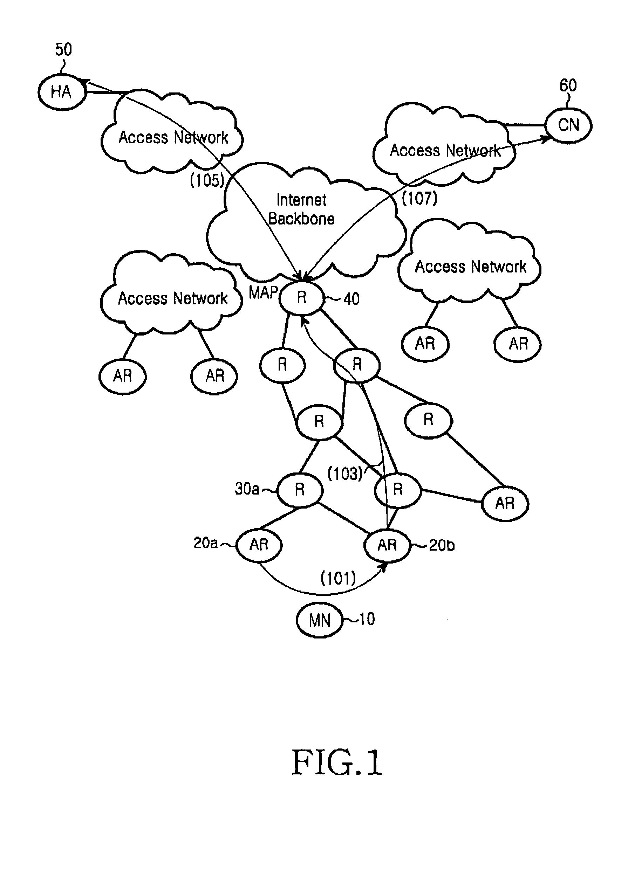

FIG. 1 illustrates a message transmission process in the conventional hierarchical MIPv6 (HMIPv6). Referring to FIG 1, when moving to a new access router (AR) 20b at step 101, a mobile node (MN) 10 discovers a mobility anchor point (MAP) 40 of an access network to which the MN 10 belongs. At step 103, the MN 10 performs local binding update to register its own LCoA to the selected MAP 40. When selecting a new MAP, the MN 10 performs a binding update to a home agent (HA) or correspondent node (CN) at steps 105 and 107.

To receive an HMIPv6 service, the MN must discover a MAP accessible from an AR connected to its own MN. When a plurality of MAPs are discovered, one MAP is selected. A dynamic MAP discovery method and a MAP discovery method using router renumbering arc typically used as MAP discovery and selection methods.

According to the MAP discovery method using router renumbering, a network manager transfers a MAP option to routers of an access network by sending a message for router renumbering using a special server or router. Because the access network docs not perform the MAP discovery in the above-described method, there is a problem in that adaptation to network topology variation is not possible and scalability is degraded when new routers are added.

According to the dynamic MAP discovery method, MAP information is transferred from the MAP to the AR through a router layer of an access network in the downstream direction, and each MN refers to a MAP option received from the access network to select a MAP located farthest therefrom.

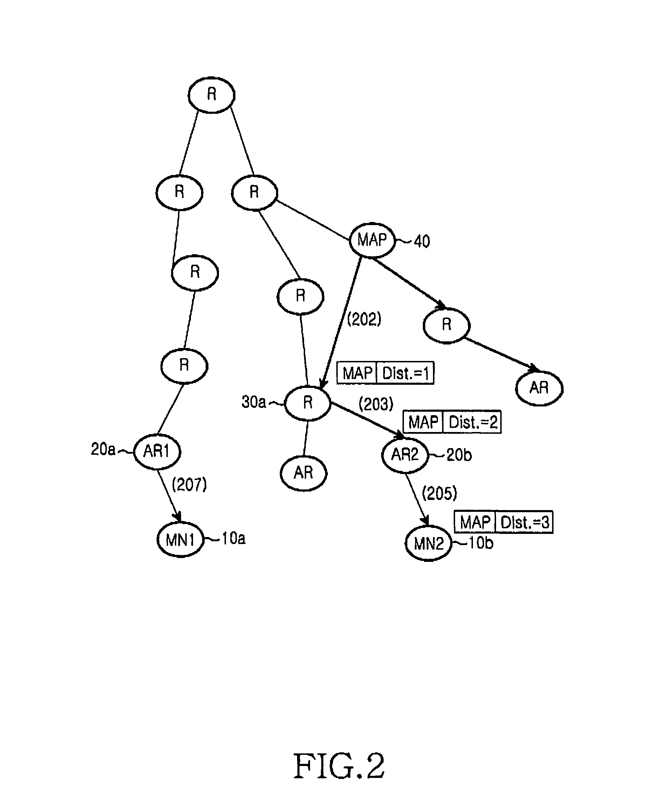

FIG 2 illustrates a MAP selection process using the conventional dynamic MAP discovery method. Referring to FIG. 2, at step 202, a router serving as a MAP 40 transfers a MAP option bearing its own information to a lower router than the MAP 40. The MAP 40 sets a value "Distance" within the MAP option to a default value of 1, and transfers the set distance value to the lower router through an interface already configured in the downstream direction by a network manager.

At step 203, a router 30a for receiving the MAP option from the MAP 40 increments a value "Distance" of the received MAP option by one and then delivers the incremented "Distance" value to Access Router 2 (AR2) 20b, serving as a lower router than the router 30a. The AR2 20b transfers the MAP option to MNs connected to its own links through a router advertisement. At step 205, Mobile Node 2 (MN2) 10b connected to the AR2 20b receives the MAP option with the value "Distance" of 3.

Because the MAP option is delivered through the hierarchical structure only in the downstream direction, Access Router 1 (AR1) 20a, which is not located in a layer corresponding to the MAP 40 and Mobile Node 1 (MN1) 10a connected thereto, cannot receive the MAP option and an HMIPv6 service at step 207.

Because the MAP option is forwarded from a higher level to a lower level according to the hierarchical structure when the conventional dynamic MAP discovery method is used, a network operator must manually set interfaces of the routers in order to designate a hierarchical forwarding path. Moreover, because the MAP option is propagated only through the hierarchical forwarding path of the routers, the MAP provides the HMIP service only through lower ARs than the MAP. Therefore, even though MNs not coupled to a MAP located on a higher level are present within the same subnet, they cannot receive a MAP service.

### SUMMARY OF THE INVENTION

Accordingly, the present invention has been designed to solve the above and other problems occurring in the prior art. Therefore, it is an object of the present invention to provide a dynamic mobility anchor point (MAP) discovery method and system in which MAPs distributed in a network system supporting a mobile Internet protocol (MIP) deliver MAP options regardless of a hierarchical structure of routers.

It is another object of the present invention to provide a mobility management method and system capable of improving location privacy of a mobile node (MN) in a network system supporting a mobile Internet protocol (MIP).

It is another object of the present invention to provide a mobility management method and system for reducing a number of times that a mobility anchor point (MAP) is changed in a network system supporting a mobile Internet protocol (MIP).

It is yet another object of the present invention to provide a mobility management method and system capable of making a mobility anchor point (MAP) domain announcement in a network system supporting a mobile Internet protocol (MIP).

In accordance with an aspect of the present invention, the above and other objects can be accomplished by a mobility anchor point (MAP) discovery method in a network system including at least one MAP for managing mobility of a mobile node (MN) and a plurality of routers connected to the at least one MAP in a hierarchical structure. The method includes: sending, by the MAP, a MAP option to at least one router located on a higher level than the MAP; and when the router located on the higher level receives the MAP option, sending an updated MAP option to neighboring routers after changing a predetermined field value included in the MAP option.

In accordance with another aspect of the present invention, the above and other objects can be accomplished by a method for managing mobility of a mobile node (MN) in a network system including at least one mobility anchor point (MAP) and a plurality of routers connected to the at least one MAP in a hierarchical structure. The method includes the steps of: sending, by the MAP, a MAP option to at least one router located on a higher level than the MAP; when the router receives the MAP option from a lower layer, changing a predetermined field value included in the MAP option; receiving, by the MN, a plurality of updated MAP options sent from the at least one MAP via at least one router; confirming, by the MN, a hierarchical level of each MAP corresponding to each MAP option using the field value; and selecting, by the MN, a MAP whose hierarchical level is highest.

In accordance with another aspect of the present invention, the above and other objects can be accomplished by a mobility management system in a network system supporting a mobile Internet protocol. The system includes: at least one mobility anchor point (MAP) for generating its own MAP option and sending the MAP option to at least one router comprising a router located on a higher level through at least one interface; and at least one router for sending an updated MAP option to neighboring routers, after changing a predetermined field value included in the MAP option by a preset value when receiving the MAP option from a lower layer.

In accordance with another aspect of the present invention, the above and other objects can be accomplished by a mobility management system in a network system supporting a mobile Internet protocol. The system includes: at least one mobility anchor point (MAP) for generating its own MAP option and sending the MAP option to at least one router comprising a router located on a higher level through at least one interface; at least one router for sending an updated MAP option to neighboring routers after changing a predetermined field value included in the MAP option by a preset value when receiving the MAP option from a lower layer; and a mobile node (MN) for receiving a plurality of updated MAP options sent from the at least one MAP via the at least one router, and selecting a MAP whose hierarchical level is highest using the field value.

In accordance with another aspect of the present invention, the above and other objects can be accomplished by a mobility management method in a network system including at least one mobility anchor point (MAP) and a plurality of routers connected to the at least one MAP in a hierarchical structure. The method includes the steps of: sending, by the MAP, a DOMAIN option including a predetermined level value indicating a MAP domain to at least one first router located on a higher level than the MAP; when the first router receives the DOMAIN option from a lower layer, changing a predetermined field value included in the DOMAIN option; and propagating an updated DOMAIN option including the field value from the first router to at least one second router connected in the hicrarchical structure, wherein the at least one first router and the at least one second router confirm a range of the MAP domain defined by the level value using the field value, respectively.

In accordance with yet another aspect of the present invention, the above and other objects can be accomplished by a mobility management system in a network system including at least one mobility anchor point (MAP) and a plurality of routers connected to the at least one MAP in a hierarchical structure. The system includes: at least one MAP for generating a DOMAIN option including a predetermined level value indicating a MAP domain to at least one router comprising a router located on a higher level through at least one interface; and at least one router for confirming a range of the MAP domain defined by the level value using a changed field value when receiving the DOMAIN option from a lower layer and sending an updated DOMAIN option including the field value to neighboring routers.

### BRIEF DESCRIPTION OF THE DRAWINGS

The above and other objects, features, and advantages of the present invention will be more clearly understood from the following detailed description taken in conjunction with the accompanying drawings, in which:
FIG. 1 illustrates a message transmission process in the conventional hierarchical MIPv6 (HMIPv6); FIG 2 illustrates a mobility anchor point (MAP) selection process using a conventional dynamic MAP discovery method; FIG. 3 illustrates a mobility management system and a mobility anchor point (MAP) discovery operation in accordance with a first embodiment of the present invention;

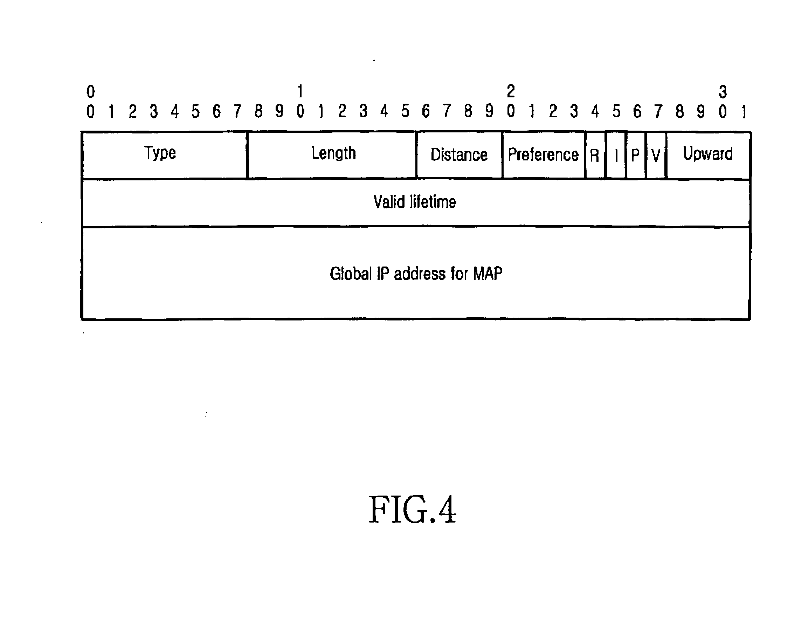

FIG 4 illustrates a MAP option message in accordance with the first embodiment of the present invention;

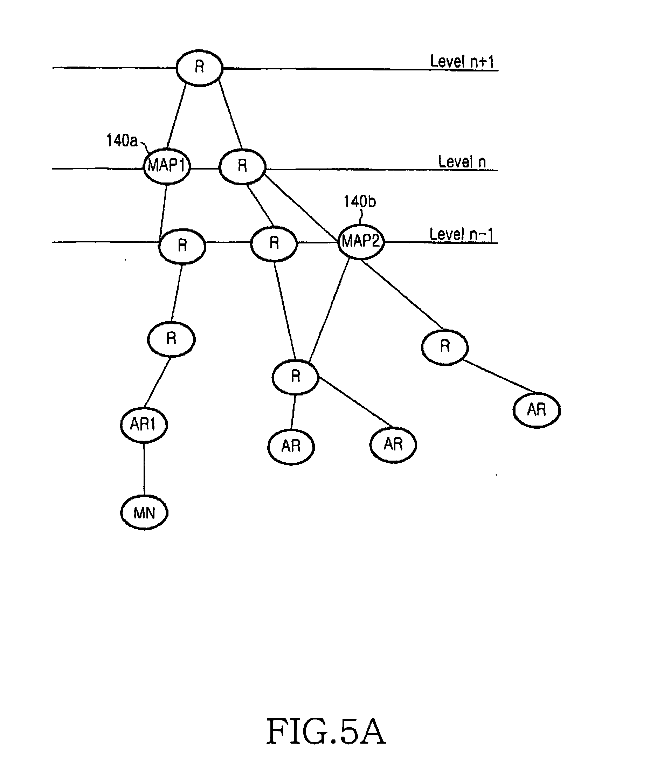

FIGS. 5A to 5C illustrate examples of a MAP selection method in accordance with the first embodiment of the present invention;

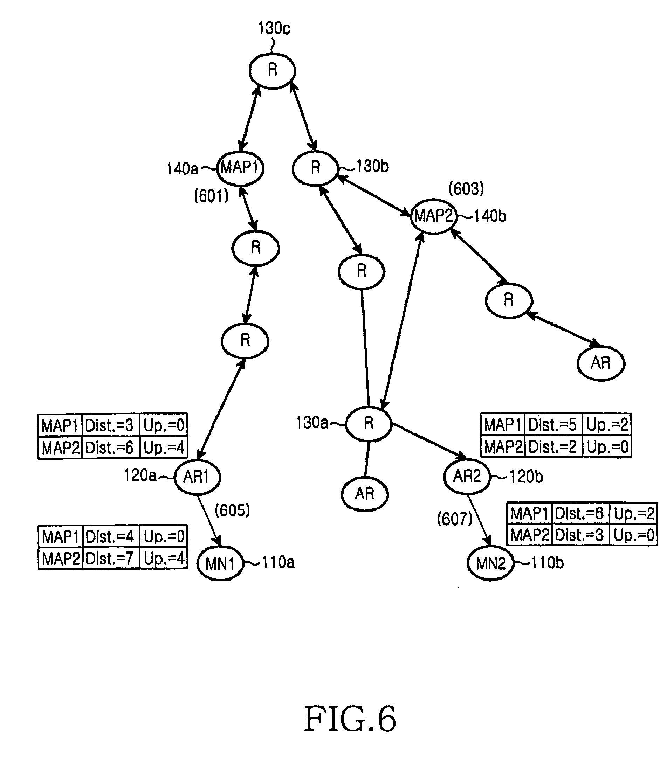

FIG. 6 illustrates a mobile node operation for selecting a MAP by means of the MAP selection method in accordance with the first embodiment of the present invention;

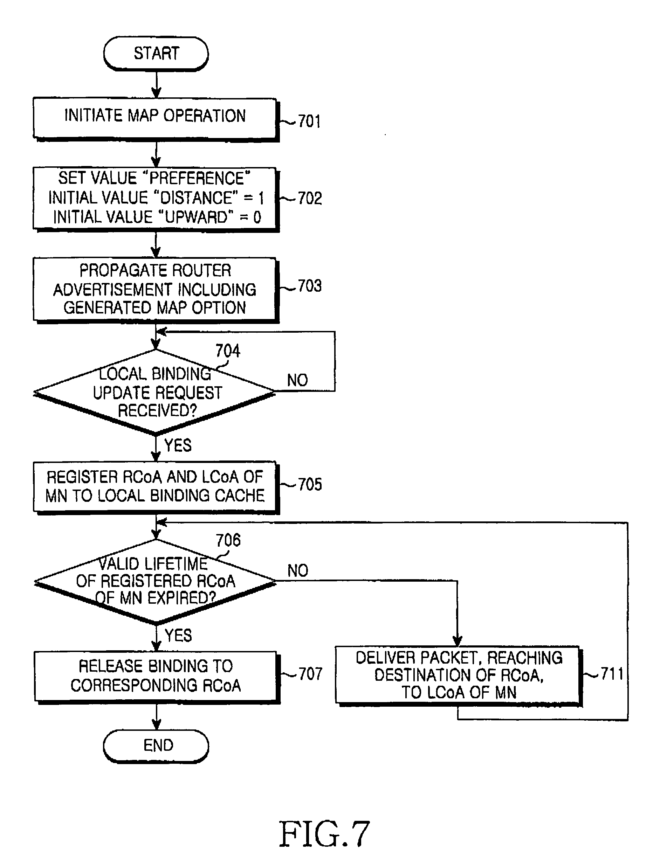

FIG 7 is a flow chart illustrating an operation of a router serving as a MAP in accordance with the first embodiment of the present invention;

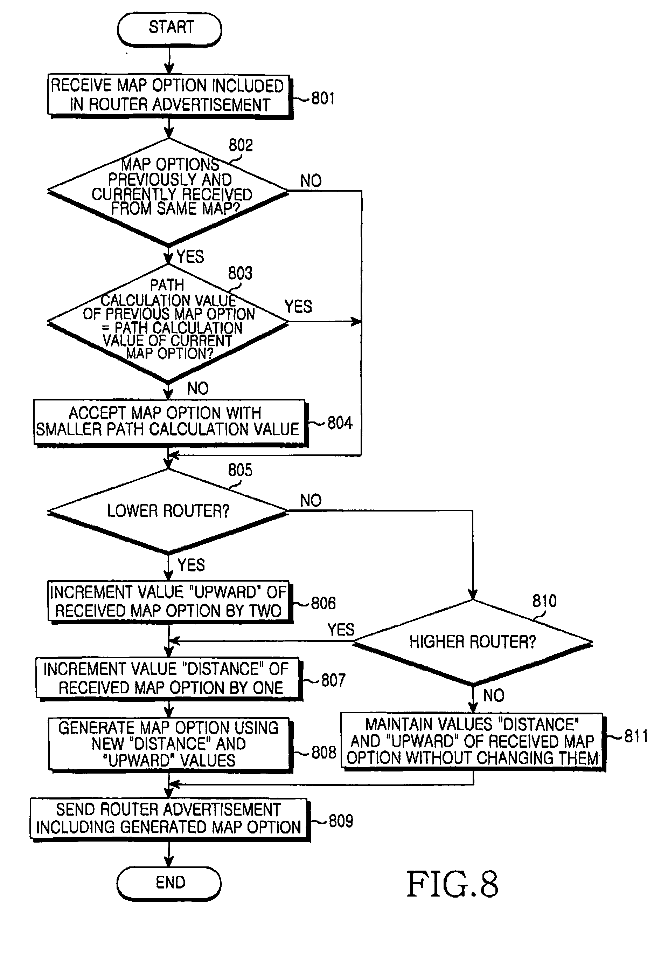

FIG. 8 is a flow chart illustrating a process for discovering and processing a MAP option in a router in accordance with the first embodiment of the present invention;

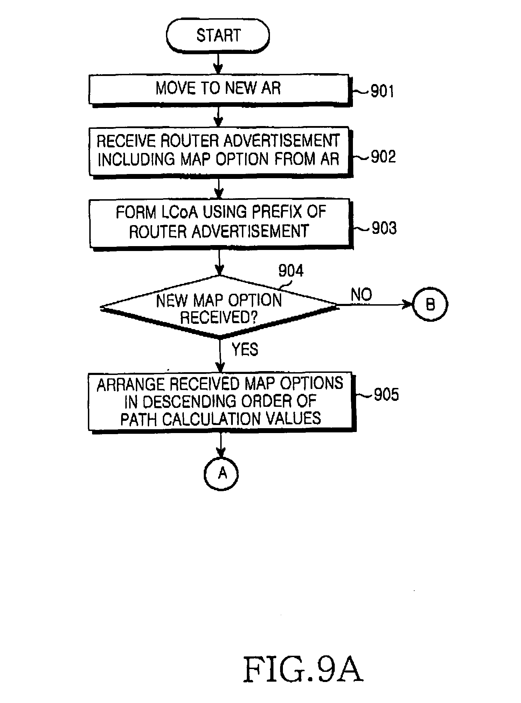

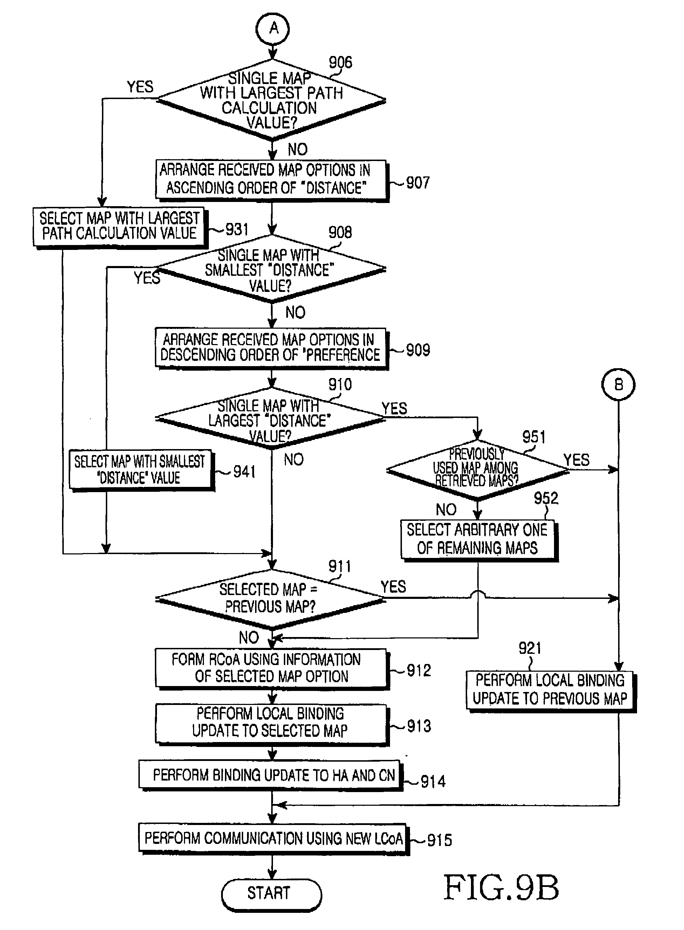

FIGS. 9A and 9B are flow charts illustrating a mobile node process for selecting a MAP in accordance with the first embodiment of the present invention;

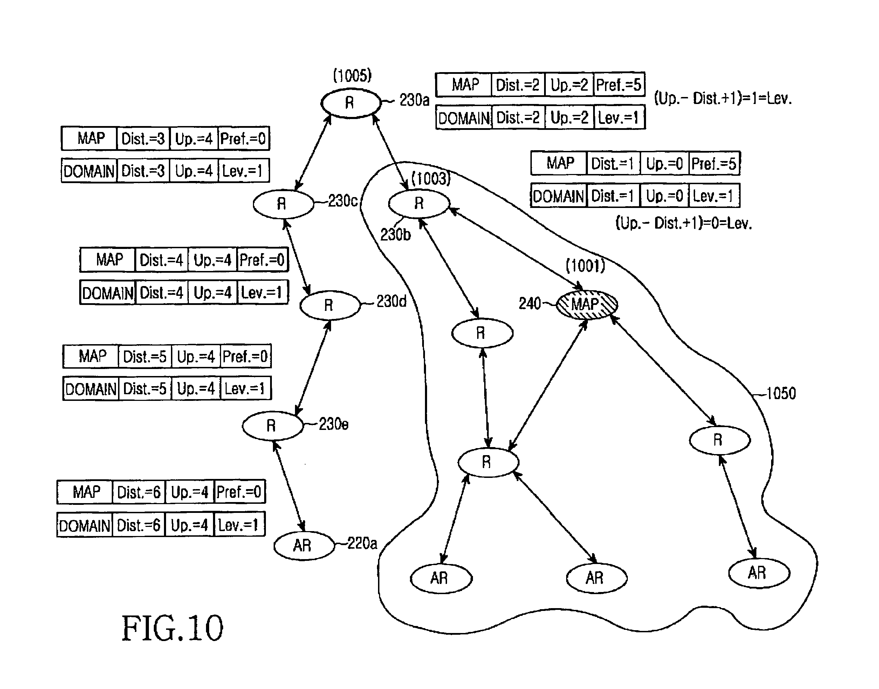

FIG. 10 illustrates a structure of the mobility management system and an operation for performing MAP domain announcement in accordance with a second embodiment of the present invention;

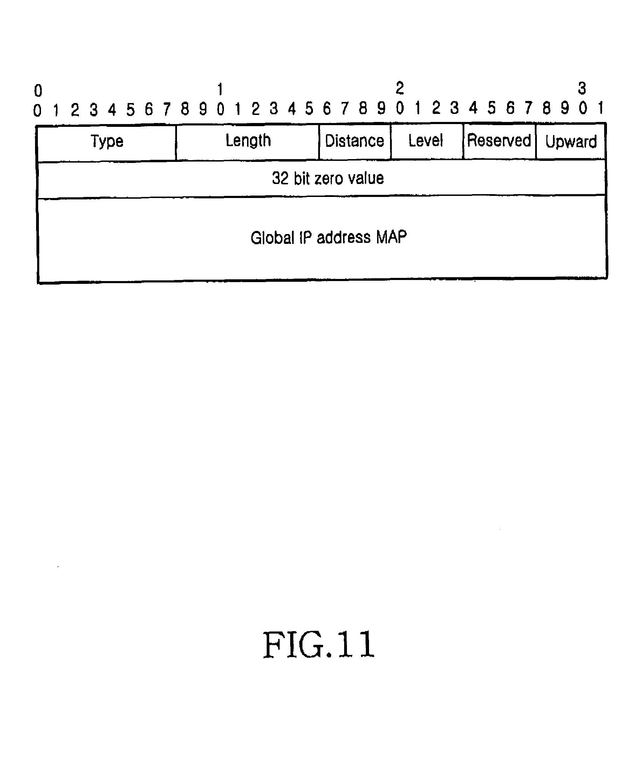

FIG. 11 illustrates a DOMAIN option message in accordance with the second embodiment of the present invention;

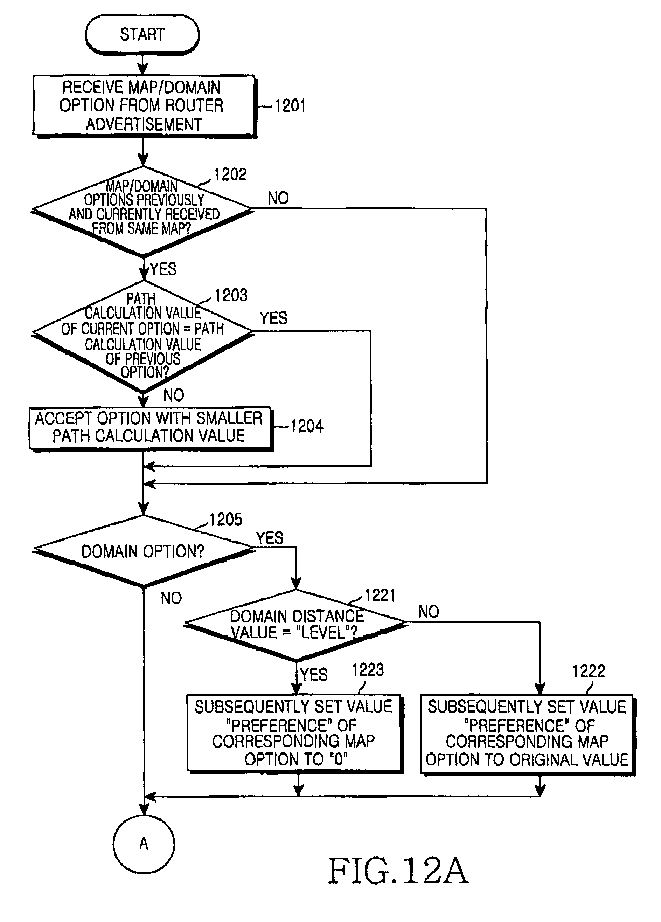

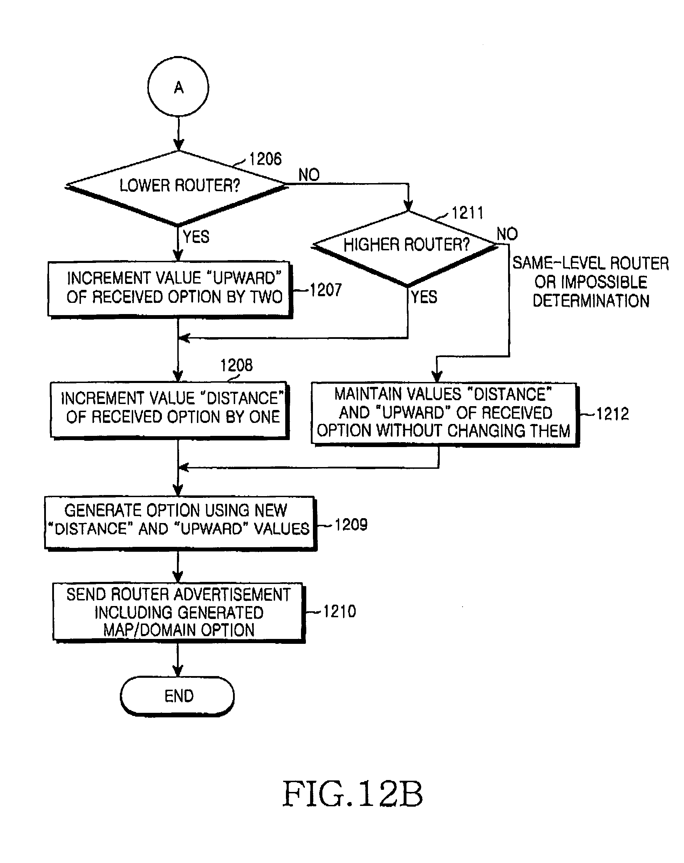

FIGS. 12A and 12B are flow charts illustrating a router process for discovering and processing a MAP option and a DOMAIN option for MAP domain announcement in accordance with the second embodiment of the present invention;

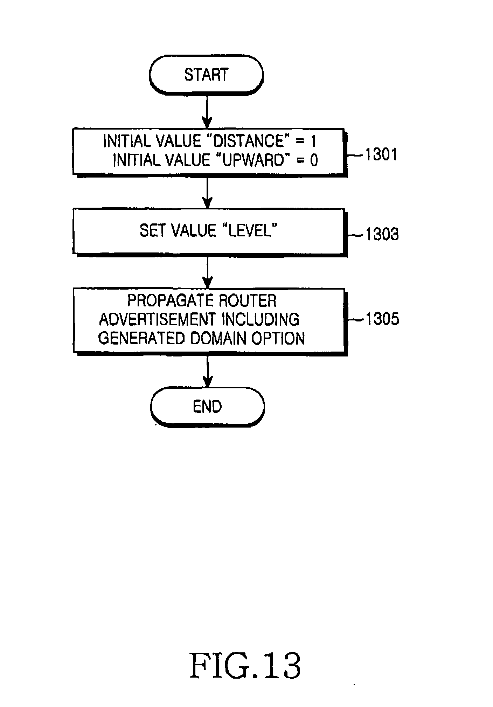

FIG. 13 is a flow chart illustrating a process for processing the DOMAIN option in a MAP in accordance with the second embodiment of the present invention; and

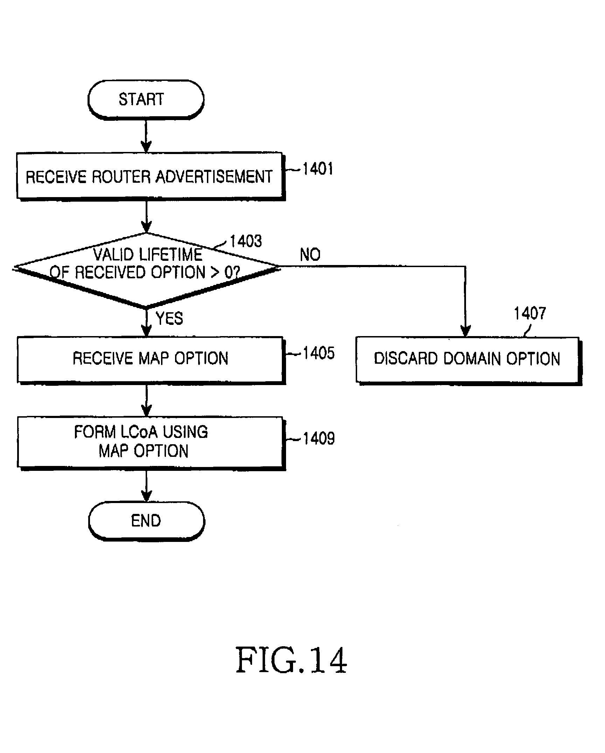

FIG 14 is a flow chart illustrating a process for processing the DOMAIN option in a mobile node in accordance with the second embodiment of the present invention.

### DETAILED DESCRIPTION OF THE PREFERRED EMBODIMENTS

Preferred embodiments of the present invention will be described in detail herein below with reference to the annexed drawings. In the drawings, the same or similar elements are denoted by the same reference numerals even though they are depicted in different drawings. Additionally, in the following description, a detailed description of known functions and configurations incorporated herein will be omitted when it may obscure the subject matter of the present invention.

The present invention will be described in relation to a mobility anchor point (MAP) discovery method capable of extending a service area of a MAP to the overall access network and a MAP selection method capable of maximizing hierarchical MIPv6 (HMIPv6) localization efficiency and location privacy by finding the highest MAP by means of a mobile node (MN).

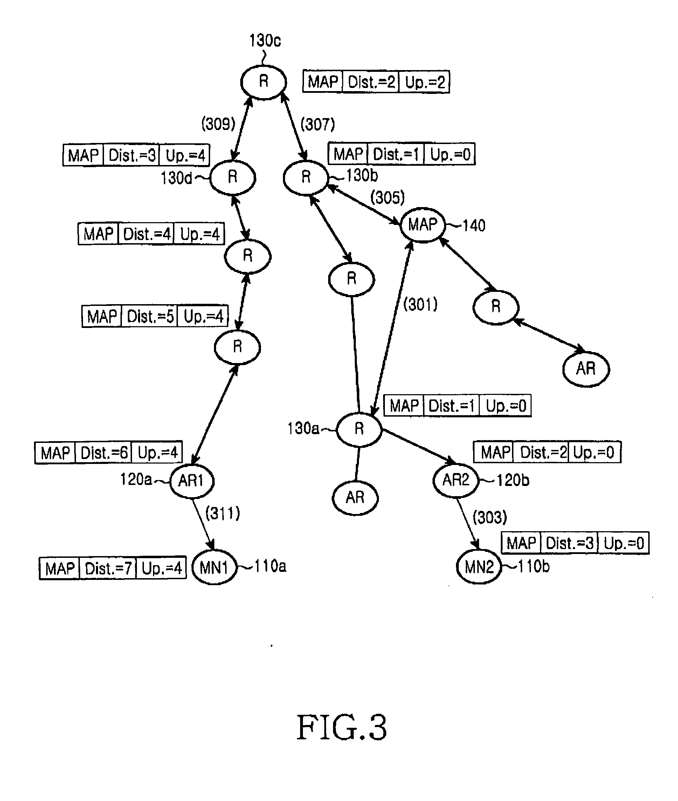

FIG 3 illustrates a mobility management system and a mobility anchor point (MAP) discovery operation in accordance with a first embodiment of the present invention. More specifically, the mobility management system illustrated in FIG. 3 includes a MAP responsible for localized mobility management for Mobile Nodes 1 and 2 (MN1 and MN2) 110a and 110b, a plurality of routers (Rs) 130a to 130d for forwarding MAP options, a plurality of access routers (ARs) serving as routers of links connected to the MN1 and MN2 110a and 110b, and the MN1 and MN2 110a and 110b changing a location using HMIPv6. However, for the convenience of explanation, only the necessary routers and necessary ARs are denoted by reference numerals.

The ARs 120a and 120b, which are the routers of the links connected to the MN1 and MN2 110a and 110b, have the same function and role as the conventional routers. The MAP 140 extends a MAP service area to the overall access network and forwards its own information, that is, a MAP option, to the MN1 and MN2 110a and 110b through the routers.

FIG 4 illustrates a MAP option message in accordance with the first embodiment of the present invention. In FIG 4, the MAP option message includes fields indicating "Type", "Length", "Preference", "Valid lifetime", and "Global IP address for MAP", fields indicating a plurality of flags "R", "I", "P", and "V" associated with a regional care-of address (RCoA), and "Distance" and "Upward" fields used for the MAP discovery.

The fields of the flags "R", "I", "P", and "V" indicate values defined when the MAP option message is generated from the MAP. The "Distance" and "Upward" fields indicate values capable of being changed while the MAP option message goes through the routers. The flags "R", "I", "P", and "V" will be described in more detail herein below.

The "Type" field indicates a type of Internet control message protocol version 6 (ICMPv6) option, and the "Length" field indicates the length of an option message in units of 8 bytes. When receiving an option in which a value set in the ''Length'' field is 0, a terminal discards the option. The "Distance" field indicates a distance between the MAP and a router receiving the MAP option. The router receiving the MAP option increments a value "Distance" by one before re-transmitting the MAP option to an adjacent router. The value "Distance" set in the "Distance" field is used as a reference value when the MN selects the MAP. The "Preference" field indicates a value "Preference" of a service from the MAP. An increased "Preference" value increases the priority that the MAP is given.

The "R" flag field indicates an "R" flag value of the received MAP option. When the "R" flag value is set to "1", the MN must form an RCoA serving as a MAP domain address using a prefix of the MAP option. The "I" flag field indicates an "I" flag value of the received MAP option. When the "I" flag value is set to "1", the MN determines the RCoA as its own source address to transmit a packet.

The "P" flag field indicates a "P" flag value of the received MAP option. When the P flag value is set to "1", the MN must use the RCoA as its own source address to transmit the packet The "V" flag field indicates a "V" flag value of the received MAP option. If the "V" flag value is set to "1", the MN must transmit the packet to the MAP through the known reverse tunnel when transmitting the packet using the RCoA as its own source address.

The "Upward" field indicates an increased upward value when the MAP option is transferred from a lower layer to a higher layer in a hierarchical structure. When the MAP option received by a router has been received from a lower router, the router increments a value "Upward" set in the "Upward" field by two, before re-transmitting the MAP option. In accordance with the present invention, the value "Upward" is used as a reference value along with the value "Distance" when the MN selects a MAP.

The "Valid lifetime" field indicates a valid lifetime of subnet prefix information of the MAP. The RCoA formed during the valid lifetime is available in the MN. The "Global IP address for MAP" field indicates an IP unicast address of the MAP. The MN forms the RCoA using prefix information of 64 more-significant bits of the IP unicast address.

The mobile IP mobility management method for maximizing hierarchical MIPv6 (HMIPv6) localization efficiency and location privacy in the mobile IP mobility management system will be described. In accordance with the embodiment of the present invention, the mobile IP mobility management method can be divided into a MAP discovery process and a MAP selection process. In the MAP discovery process, the routers exchange MAP options and deliver MAP information to an AR connected to the MN. In the MAP selection process, the MN locates an optimum MAP on the basis of information received from the AR.

Referring again to FIG. 3, a MAP 140 sends its own MAP option to Mobile Nodes 1 and 2 (MN1 and MN2) 110a and 110b via all interfaces. The MAP option newly includes a value "Upward" whenever the MAP option is delivered upward from a lower layer to a higher layer along with the existing information, such as a value "Distance". Whenever the MAP option passes through a router, the router receiving the MAP option updates the values "Distance" and "Upward".

In accordance with the present invention, the MAP discovery process locates an appropriate MAP on the basis of values "Distance" and "Upward" included in a plurality of MAP options received by MNs or routers. The MNs and routers calculate a value of (Distance - Upward) and identify the adjacency in the hierarchical structure.

At step 301, the MAP 140 forwards its own MAP option to routers in the hierarchical structure. At this time, a value "Upward" is added to the forwarded MAP option along with the existing information in accordance with the present invention, and a result of the addition is forwarded to the adjacent routers 130a, 130b, etc. The router 130a receiving the MAP option forwards the MAP option to Access router 2 (AR2) 120b. At step 303, the MN1 110a connected to the lowest AR2 120b receives the MAP option including the values "Distance" and "Upward" from the AR2 120b.

The MAP 140 delivers the MAP option via all interfaces. At steps 305 to 307, the MAP 140, different from the MAP according to the prior art, delivers the MAP option in the upstream direction, that is, to the higher routers 130b and 130c. At step 309, the highest router 130c increments the value "Upward" of the MAP option received from the router 130b by two, and delivers the MAP option including the updated "Upward" value to a router 130d of a hierarchical path to which Access Router 1 (AR1) 120a connected to the MN1 110a is connected.

At step 311, the MN1 110a, different from the MN according to the prior art, connected to the AR1 120a, receives the MAP option from the MAP 140 located on a different layer. Accordingly, all MNs of the access network can receive the MAP option.

Next, when the MAP option has been delivered, the MN can receive a plurality of MAP options from at least two MAPs. Because the number of MAPs to which the MN performs a local binding update is one, one MAP option is selected when the plurality of MAP options are received.
FIGS. 5A to 5C illustrate examples of the MAP selection method in accordance with the first embodiment of the present invention. Referring to FIG 5A as a first example, when receiving MAP options from Mobility Anchor Points 1 and 2 (MAP1 and MAP2) 140a and 140b, which are located on different levels, the MN first selects the MAP1 located on a higher hierarchical level. The level of the MAP is determined by values "Distance" and "Upward" included in the MAP option.

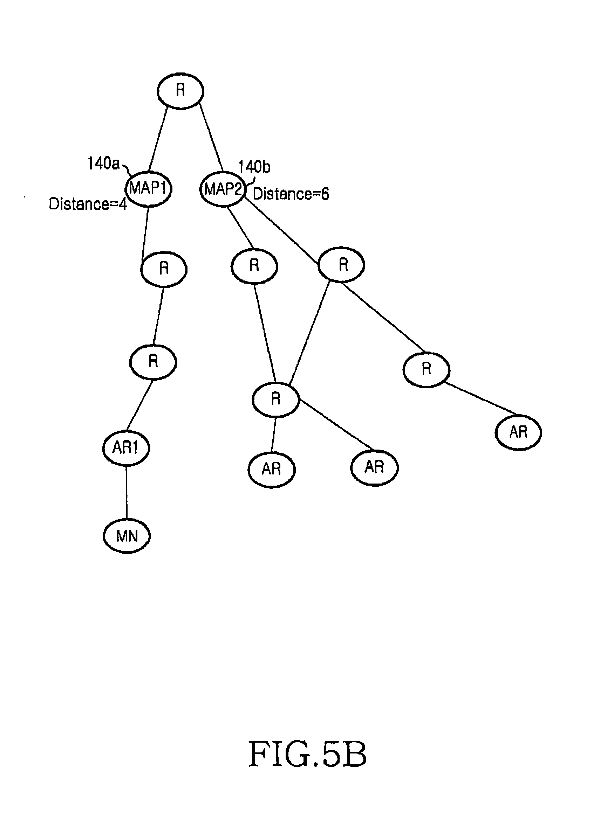

Referring to FIG. 5B as a second example, when the MAP1 140a and the MAP2 140b are located on the same hierarchical level, the MN selects the MAP1 140a topologically more adjacent to its own MN. The adjacency of the MAP is determined by the distance value of the MAP option.

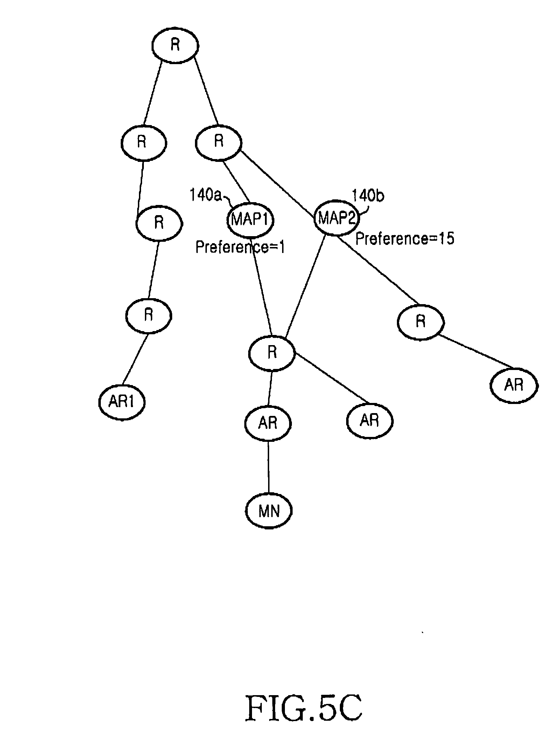

Referring to FIG. 5C as a third example, when the MAP1 140a and the MAP2 140b are located on the same level and spaced from the MN by the same topological distance, the MN selects the MAP2 140b with a larger value "Preference".

FIG 6 illustrates an MN operation for selecting a MAP by means of the MAP selection method in accordance with the first embodiment of the present invention. Referring to FIG 6, the MAP 140a and the MAP2 140b forward their own MAP options to routers of the hierarchical structure at steps 601 and 603, respectively. A value "Distance" or "Upward" of the MAP option is incremented or not changed whenever the MAP option passes through a router. Both the values "Distance" and "Upward" are incremented whenever the MAP option is delivered in the upstream direction in the hierarchical structure. When the MAP option is delivered in the downstream direction, only the value "Distance" is incremented and the value "Upward" is maintained. When the MAP option is delivered between routers on the same level, both the values "Distance" and "Upward" are not changed.

At step 605, the MN1 110a receives, from the MAP1 140a, a MAP option in which the values "Distance" and "Upward" are 4 and 0, respectively, and receives, from the MAP2 140b, a MAP option in which the values "Distance" and "Upward" are 7 and 4, respectively. The MN1 110a confirms the values "Distance" and "Upward" from the MAP1 140a and the MAP2 140b.

In the MAP option from the MAP1, a value of (Distance - Upward) is (4 - 0) (= 4). In the MAP option from the MAP2, a value of (Distance - Upward) is (7 - 4) (= 3). The MN1 110a selects the MAP1 140a with a larger path calculation value of (Distance - Upward) using a MAP selection procedure illustrated in FIG. 9. Consequently, it can be seen that the MN1 110a selects the MAP1 140a located on a higher level.

At step 607, the MN2 110b receives, from the MAP1 140a, a MAP option in which the values "Distance" and "Upward" are 6 and 2, respectively, and receives from the MAP2 140b, a MAP option in which the values "Distance" and "Upward" are 3 and 0, respectively. The MN2 110b confirms the values "Distance" and "Upward" from the MAP1 140a and the MAP2 140b.

In the MAP option from the MAP1, a value of (Distance - Upward) is (6 - 2) (= 4). In the MAP option from the MAP2, a value of (Distance - Upward) is (3 - 0) (= 3). The MN2 110b selects the MAP1 140a with a path calculation value of (Distance - Upward) using a MAP selection procedure illustrated in FIG 9. Consequently, it can be seen that the MN2 110b selects the MAP1 140a located on the higher level. Because a location of a MAP is not changed in the overall hierarchical structure, a MAP on the higher level can be discovered even though a router or MN is changed.

FIG. 7 is a flow chart illustrating an operation of a router serving as a MAP in accordance with the first embodiment of the present invention. More specifically, in FIG 7, a basic function of the MAP has a minimum variation, and a process for generating a MAP option and receiving a local binding update of the MN will be described.

Referring to FIG. 7, the MAP is initialized and starts to operate at step 701. The MAP is a router with a special function for binding an RCoA and an LCoA and serves as a local HA in HMIPv6. At step 702, the MAP generates the MAP option based on the message format illustrated in FIG. 4. In the MAP option, a value of a "Preference" field is a setup value, and values "Distance" and "Upward" are set to initial values of 1 and 0, respectively. Here, the value "Upward" uses a reserved field of the MAP option based on HMIPv6.

At step 703, the MAP waits to receive a local binding update request from the MN, after forwarding the generated MAP option included in a router advertisement via all interfaces. At step 704, the MAP determines if the local binding update request has been received. If no local binding update request has been received, step 704 is continuously performed. However, when local binding update request has been received, the MAP registers the RCoA and LCoA of the MN to a local binding cache (not shown) at step 705. At this time, the MAP determines if the RCoA previously provided by the MN is valid in a subnet of the MAP by means of a duplicate address detection (DAD) process.

At step 706, the MAP determines if a valid lifetime of the registered RCoA of the MN has expired. When a packet destined for the RCoA serving as a destination is received, if the lifetime has not expired as a result of the determination, the received packet is delivered to the MN of the LCoA bound with the RCoA at step 711. Here, source/destination RCoA assignment based on R, I, P, and V flags conforms to a definition of HMIPv6. However, if the valid lifetime of the registered RCoA has expired, the MAP releases binding with a corresponding RCoA at step 707.

FIG 8 is a flow chart illustrating a process for discovering and processing a MAP option in a router in accordance with the first embodiment of the present invention. In FIG. 8, only the router operation for processing the MAP option to efficiently forward the MAP option will be described.

Referring to FIG 8, at step 801, the router receives the MAP option included in a router advertisement Because the router advertisement is forwarded via all interfaces, the router can receive MAP option messages from the same MAP via at least two interfaces. The router advertisement includes MAP options sent from a plurality of MAPs. Once the MAP options delivered from the different MAPs are included in a single router advertisement, they are delivered through the same path. Therefore, it should be noted that values "Distance" and "Upward" of the MAP options from the MAPs are simultaneously changed within the single router advertisement.

When receiving at least two MAP options from the same MAP at steps 802, 803, and 804, the router determines if the MAP options are equal to each other. That is, at step 802, the router determines if current and previous MAP options have been received from the same MAP. If the current and previous MAP options have been received from different MAPs , the router proceeds to step 805. However, if the MAP options have been received from the same MAP, the router compares path calculation values of (Distance - Upward) of the currently and previously received MAP options, at step 803. When the path calculation values are the same, the router proceeds to the above step 805.

When the path calculation values of the MAP options received from the same MAP are different from each other, the router accepts the MAP option with a smaller path calculation value at step 804. Then, after performing the process, the router obtains different MAP options. Because the MAP option is propagated through a plurality of paths, the router can receive, from the same MAP, a plurality of MAP options in which values "Distance" and "Upward" are different. The router determines that a MAP option with a smaller difference value between the values "Distance" and "Upward", that is, a MAP option delivered through a shorter path, is valid. When the process is terminated, the router has one MAP option sent from a specific MAP.

At step 805, the router determines if a sender of the received router advertisement is a lower router. If the sender of the received router advertisement is not a lower router, the router proceeds to step 810 and determines if the sender of the received router advertisement is a higher router. If the sender is a higher router, the router proceeds to step 807.

When sending and receiving routers of the advertisement are located on the same level or a level of the sending router cannot be determined, values "Distance" and "Upward" of the received MAP option are not changed and instead are maintained at step 811. Then, the router proceeds to step 809.

If a receiver of the router advertisement is a higher router as a result of the determination at the above step 805, the router increments the value "Upward" of the received MAP option by two at step 806. When the MAP option is delivered upward or downward, the value "Distance" is incremented by one. Whenever the MAP option is delivered downward to a lower router, a value of (Distance - Upward) is incremented by one. Whenever the MAP option is delivered upward to a higher router, a value of (Distance - Upward) is decremented by one. At step 807, the router increments the value "Distance" of the received MAP option by one.

When the received router advertisement is delivered from a higher router, the values "Distance" of all MAP options included in the advertisement are incremented by one, respectively, and the values "Upward" of all MAP options included in the advertisement are not changed. However, when the received router advertisement is delivered from a lower router, the upward values of all MAP options included in the advertisement are incremented by two, respectively, and the values "Distance" of all MAP options included in the advertisement are incremented by one, respectively.

At step 808, the router generates a new MAP option using the updated "Distance" and "Upward" values. At step 809, the router includes the updated "Distance" and "Upward" values in the router advertisement and sends the router advertisement to other adjacent routers via all interfaces thereof.

FIGS. 9A and 9B are flow charts illustrating a mobile node process for selecting a MAP in accordance with the first embodiment of the present invention. Referring to FIG. 9A, the MN moves to a link of a new AR at step 901 and receives a router advertisement from the AR at step 902. When receiving a new router advertisement message, the MN recognizes that its own MN has moved to the new AR, and receives MAP options through the router advertisement message. When the MN does not receive a router advertisement from the AR for a predetermined time, it can send router solicitation.

When a link of the MN is changed, the MN cannot use a previous LCoA because the prefix is changed. Therefore, the MN must form a new LCoA. Accordingly, the MN forms the new LCoA at step 903. Here, the LCoA can be formed by stateless address autoconfiguration using the prefix of the AR included in the router advertisement or stateful address autoconfiguration using an external server (not shown).

At step 904, the MN checks the currently received MAP option, and determines if the currently received MAP option is equal to the previously received MAP option, that is, if a new MAP option has been received. If the currently received MAP option is equal to the previously received MAP option, the MN performs a local binding update to the previous MAP at step 921 and then proceeds to step 915 (FIG. 9B). However, if a new MAP option has been received, the MN arranges the received MAP options in descending order of path calculation values at step 905. A larger path calculation value indicates that a corresponding MAP is located on a higher level in the hierarchical structure of routers. Accordingly, the MN gives the first priority to a MAP with the largest path calculation value when selecting a MAP.

Referring to FIG. 9B, the MN determines, at step 906, if a single MAP has the largest path calculation value. If a single MAP has the largest path calculation value, the MN selects the single MAP with the largest path calculation value at step 931 and then proceeds to step 911. If multiple MAPs have the largest path calculation value, the MN arranges the MAP options with the largest path calculation value in ascending order of "Distance" at step 907. Because a corresponding MAP is closer to the MN as a value "Distance" is smaller, the MN gives the second priority to a MAP with the smallest "Distance" value among the MAP options with the largest path calculation value when selecting a MAP.

The MN determines, at step 908, if a single MAP has the smallest "Distance" value. If a single MAP has both the largest path calculation value and the smallest "Distance" value, the MN selects the single MAP at step 941. Otherwise, the MN arranges the received MAP options with the smallest "Distance" value in descending order of "Preference" at step 909.

At step 910, the MN determines if a single MAP has the largest "Preference" value, if multiple MAPs have the largest path calculation value and the smallest "Distance" value. The value "Preference" is used for giving the third priority when the MN selects an appropriate MAP.

If multiple MAPs have the largest "Preference" value, that is, if at least two MAPs simultaneously have the largest path calculation value, the smallest "Distance" value and the largest "Preference" value, the MN determines, at step 951, if a previously used MAP is present among retrieved MAPs. As described above, if the previous MAP is present, the MN performs a local binding update to the previous MAP at step 921 and then proceeds to step 915. However, if the previous MAP is absent, the MN selects an arbitrary MAP from among remaining MAPs. When the value "Preference" of a specific MAP option is set to "0", a corresponding MAP is not taken into account regardless of a path calculation value.

The MN determines, at step 911, if a MAP selected by means of the three methods (comparing path calculation values, "Distance" values and "Preference" values) is a previously used MAP. If the selected MAP is the previously used MAP, the MN proceeds to step 921. However, when the selected MAP is not a previously used MAP, the MN forms a changed RCoA using a subnet prefix as 64 more-significant bits of the "Global IP address for MAP" field of the selected MAP option at step 912. Because the MAP has been changed, the MN performs a local binding update to a new MAP using a new LCoA at step 913. At step 914, when the local binding update is successful, the MN performs a binding update to an HA and CN using the new RCoA.

After all tasks relating to the binding update are completed, the MN sends data to the MAP using the LCoA serving as a source IP address. The MAP changes the source IP address to the RCoA and sends the received data to the HA or CN. When the HA or CN desires to send the data to a corresponding MN, it sends data to the RCoA serving as the destination IP address. Then, the MAP intercepts the data sent to the RCoA and delivers the intercepted data to a corresponding MN with a registered LCoA. The MN communicates with the CN using the new LCoA at step 915.

In accordance with the first embodiment of the present invention, a method has been described that uses only MAP options to manage mobility of the MN using MIP. However, in accordance with a second embodiment of the present invention, a mobility management method will be described herein below which performs MAP domain announcement in the mobility management system using a DOMAIN option and a MAP option.

FIG. 10 illustrates a mobility management system and an operation for performing MAP domain announcement in accordance with the second embodiment of the present invention. Referring to FIG. 10, each MAP delivers a DOMAIN option in accordance with the present invention (illustrated in FIG 11) via its own interfaces as when a MAP option is delivered. Here, a configuration of the DOMAIN option includes values "Distance" and "Upward" as in the MAP option illustrated in FIG 4. Because the values "Distance" and "Upward" of the DOMAIN option are similar to those of the MAP option, a detailed description of the values "Distance" and "Upward" is omitted.

In FIG. 10, a MAP 240 delivers its own DOMAIN option to neighboring routers via all interfaces as when the MAP option is delivered at step 1001. A router again delivers the received DOMAIN option to neighboring routers. Values "Distance" and "Upward" of the DOMAIN option sent to the neighboring routers by the MAP are "1" and "0", respectively, and a value "Level" of the DOMAIN option is set to, for example, "1". The value "Level" is used for designating a threshold level in which a MAP domain is set. In an example illustrated in FIG 10, a value "Preference" of the MAP is set to "5".

At step 1003, a router 230b receiving the DOMAIN option from the MAP changes the values "Distance" and "Upward" using the same method illustrated in FIG 8 as when the MAP is processed.

Whenever the routers receive the DOMAIN option, they calculate a value of (Upward - Distance + 1) (hereinafter, referred to as "domain distance value"), respectively. The domain distance value serves as a reference value for determining the routers to be excluded from a MAP domain. If the domain distance value is equal to a value "Level", a corresponding router changes the value "Preference" to "0", and delivers the updated MAP option when again sending the subsequently received MAP option from the same MAP.

Because the domain distance value and the value "Level" of the DOMAIN option are "0" and "1", respectively, in the router 230b, at the above step 1003, it can be seen that the router 230b is included within a MAP domain 1050.

As illustrated in FIG 10, the router 230a has a value "Distance" (= 2) and a value "Upward" (= 2) according to the calculation method illustrated in FIG 8 at step 1005. Because the domain distance value is "1" and the value "Level" assigned by the MAP 240 is "1", the router 230a is excluded from the MAP domain 1050. The router 230a re-sets the previous "Preference" value of "5" to "0" when sending a MAP option subsequently received from the same MAP.

Routers 203c, 203d, and 203c and an AR 220a receiving the MAP option through the router 203 a receive the MAP option in which "Preference" = 0. As the routers receiving the "Treference" value of 0 and another router or MN located on their lower level do not attempt HMIP binding to the MAP, the MAP can provide local binding only to an area of a desired range. In FIG. 10, the MAP domain 1050 is indicated by a solid-line boundary. The MAP domain 1050 includes routers and MNs below a router one level higher than the MAP.

FIG. 11 illustrates a DOMAIN option message in accordance with the second embodiment of the present invention. Referring to FIGS. 4 and 11, both DOMAIN and MAP options are included in an option field of a router advertisement message, and are delivered to other routers through the router advertisement. Because the format of the DOMAIN option is similar to that of the MAP option, the DOMAIN option is sent to other routers by means of the above-described MAP discovery method. However, the DOMAIN option, different from the MAP option, is generated and delivered only when the MAP domain 1050 is changed. Routers receiving the DOMAIN option must undergo a process illustrated in FIG 12. The DOMAIN option, different from the MAP option, includes a "Level" field in place of the "Preference" field. In the DOMAIN option, a "Reserved" field is configured in place of the flag (R, I, P, V) field, and a "32-bit zero value" field is configured in place of the "Valid lifetime" field.

The "Level" field indicates a hierarchical level value of the highest router belonging to the MAP domain. Level value means a relative level difference to a corresponding MAP. That is, when the level value is "n", all routers and MNs below a router "n" number of levels higher than a corresponding MAP are included in the MAP domain, thereby receiving an HMIP service of the MAP.

The "32-bit zero value" field is produced by setting, to zero, a field of the DOMAIN option corresponding to the "Valid lifetime" field of the existing MAP option. The "32-bit zero value" field is used to distinguish the DOMAIN option from the MAP option. Accordingly, the router receiving a router advertisement inspects a field corresponding to the "Valid lifetime" field of the MAP/DOMAIN option. When a value of the inspected field is non-zero, the router determines a received option as a MAP option and delivers a corresponding MAP option to the neighboring routers. However, when a value of the inspected field is zero, the router determines a received option as a DOMAIN option and sets the value "Preference" to the smallest value of 0 in a MAP option of a corresponding MAP subsequently delivered to the router, and is delivered to the neighboring routers. This process continues until a new DOMAIN option is received.

FIGS. 12A and 12B are flow charts illustrating a router process for discovering and processing a MAP option and a DOMAIN option for MAP domain announcement in accordance with the second embodiment of the present invention. While the MAP and DOMAIN options are discovered and processed, all values below zero are considered as zero when a result of each subtraction operation is smaller than zero, i.e., a negative value.

Referring to FIG. 12A, at step 1201, the router receives the MAP/DOMAIN option from neighboring routers. The two options are received through a router advertisement of all neighboring routers. At step 1202, the router determines if current and previous MAP/DOMAIN options have been received from the same MAP. If the MAP/DOMAIN options have been received from different MAPs as a result of the determination, the process proceeds to step 1205. However, if the MAP/DOMAIN options have been received from the same MAP at the above step 1202, the router determines, at step 1203, if path calculation values of the currently and previously received MAP/DOMAIN options are the same.

If the path calculation values are the same as each other, the process proceeds to the above step 1205. However, if the path calculation values are not the same as each other, the router accepts the MAP option with a smaller path calculation value at step 1204. That is, the router inspects the duplicate received MAP options and selects the MAP option delivered through a shorter path when duplicate MAP options are received at the above steps 1202 to 1204. Steps 1202 to 1204 are the same as the above steps 802 to 804 illustrated in FIG 8.

At step 1205, the router reads a "Valid lifetime"/"32-bit zero value" field, and determines whether the received option is a MAP or DOMAIN option. A criterion of the determination is a field value. When the field value is larger than "0", the received option is a MAP option. However, when the field value is "0", the received option is a DOMAIN option. That is, the router determines if the value of the "Valid lifetime"/"32-bit zero value" field is larger than "0". If the value of the received field is equal to or smaller than "0", the received option is determined to be the DOMAIN option. The router calculates a domain distance value of the DOMAIN option, and compares the calculated domain distance value with a value "Level" at step 1221.

If two values are the same as each other at the above step 1221, a corresponding router is excluded from the MAP domain and the router excluded from the MAP domain sets a value "Preference" of a corresponding MAP option to "0" at step 1223. The process proceeds to step 1206 (FIG. 12B). However, if the domain distance value and the value "Level" are different from each other and a corresponding router has previously changed the value "Preference" of a specific MAP option to "0" on the basis of a previous DOMAIN option, the router sets the value "Preference" to an original value before a DOMAIN option is delivered at step 1222. Then, the process proceeds to the above step 1206.

Referring to FIG 12B, when the value of the "Valid lifetime" field/"32-bit zero value" field determined at step 1205 is larger than "0", the process proceeds to step 1206. Step 1206 and steps 1207 to 1212 adjust the values "Distance" and "Upward" of a MAP/DOMAIN option. Basic operation of the above steps 1206 to 1212 is the same as that of the above steps 805 to 811. If the received option is the MAP option, the router changes only the values "Distance" and "Upward" of a corresponding option without comparing the domain distance value and the value "Level", and delivers the updated MAP option to other routers.

At step 1206, the router determines if a sender of a received router advertisement is a lower router. If the sender of the received router advertisement is not a lower router, a determination is made as to whether or not the sender of the received router advertisement is a higher router at the above step 1211. If the sender is a higher router as a result of the determination, a value "Distance" of the received MAP or DOMAIN option is incremented by one at step 1208.

When sending and receiving routers of the advertisement are located on the same level or a level of the sending router cannot be determined, values "Distance" and "Upward" of the received MAP or DOMAIN option are not changed and instead are maintained at step 1212. The router then proceeds to step 1209.

However, if a receiver of the router advertisement is a higher router as the result of the determination at step 1206, the router increments the value ''Upward'' of the received MAP or DOMAIN option by two at step 1207 and increments the value "Distance" of the received MAP or DOMAIN option by one at step 1208.

At step 1209, the router generates an updated MAP or DOMAIN option using new "Distance" and "Upward" values. At step 1210, the router includes the updated MAP or DOMAIN option in the router advertisement, and delivers the router advertisement including the updated MAP or DOMAIN option.

However, when the domain distance value and the value "Level" are the same as each other at step 1221, the router is located on a boundary of a corresponding MAP domain. Therefore, the router sets the value "Preference" of a corresponding MAP option to "0" and delivers the MAP option to other routers, such that the routers outside the MAP domain do not receive MAP service. The router performs the steps 1206 to 1212 to deliver the DOMAIN option to neighboring routers.

The MAP domain can be changed according to a type of service of a provider or a network state. For convenience of explanation, a setup and announcement process associated with a single MAP domain has been described in FIG. 12. However, it should be noted that a plurality of MAP domains can be set in a network and the plurality of MAP domains set by different MAPs can be set as separate domains or can partially intersect each other so that a network is stably managed.

FIG. 13 is a flow chart illustrating a process for processing the DOMAIN option in a MAP in accordance with the second embodiment of the present invention. Referring to FIG. 13, the MAP must process the DOMAIN option, independent of the MAP option processing procedure illustrated in FIG. 7. The MAP generates and propagates the DOMAIN option independent of the MAP option. The MAP option is periodically propagated in a router advertisement, while the DOMAIN option is generated and propagated in the router advertisement only when a MAP domain is changed.

At step 1301, the MAP generates a DOMAIN option when desiring to change its service domain. Initial "Distance" and "Upward" values of the generated DOMAIN option are respectively set to "1" and "0" like those of the MAP option. A "32-bit zero value" field corresponding to a "Valid lifetime" field is filled with 0's to distinguish the DOMAIN option from the MAP option.

At step 1303, the MAP sets a value "Level" to define a desired domain range. In accordance with the second embodiment of the present invention, "Level" indicates the height of the highest router in the MAP domain. For example, when "Level" = 2, a newly defined domain includes the MAP, a router two levels higher than the MAP, and routers and MNs located below a corresponding router. As illustrated in FIG. 10, the value "Level" is set to "1" and the MAP domain includes routers and MNs below a router one level higher than the MAP.

At step 1305, the MAP attaches the generated DOMAIN option to the router advertisement as when the MAP option is included in the router advertisement, and then delivers the DOMAIN option to neighboring routers.

FIG. 14 is a flow chart illustrating a process for processing the DOMAIN option in a mobile node (MN) in accordance with the second embodiment of the present invention. More specifically, the process illustrated in FIG. 14 is the MN operation to be added to the process illustrated in FIG 9, such that the DOMAIN option is processed. Here, the DOMAIN option affects only the routers. However, because the DOMAIN option delivery method is the same as the MAP option delivery method, the DOMAIN option is also delivered to the MN.

Step 1401 is subsequent to step 902 illustrated in FIG. 9. Here, the MN receives a router advertisement sent from an AR. If the MAP propagates the DOMAIN option, the DOMAIN option is included in an option field of a router broadcast and is delivered to the MN.

At step 1403, the MN determines if a value corresponding to a "Valid lifetime" field of the received option is larger than "0" and then determines if the received option is a MAP or DOMAIN option. When a value corresponding to the "Valid lifetime" field of the received option is larger than "0", the MN determines that the received option is a MAP option bearing MAP position information. However, when a value corresponding to the "Valid lifetime" field, that is, a value of the "32-bit zero value" field, is zero, the MN determines that the received option is a DOMAIN option and then discards the DOMAIN option at step 1407. Here, the determination is based on a value corresponding to the ''Valid lifetime" field.

When the MAP option is received, the MN forms an LCoA using the received MAP option and then performs a MAP selection process at step 1409. The MAP selection process is performed after step 903 illustrated in FIG. 9.

There have been described the above-described embodiments in which a mobile node (MN) can efficiently select a mobility anchor point (MAP) using an incremented value "Upward" whenever a MAP option is delivered to a higher router. Alternatively, the MN can select the MAP using a decremented value whenever a MAP option is delivered to a higher router. When the MAP option is propagated to the higher router in accordance with the present invention, the MN identifies the MAP option propagated to the higher router. Consequently, the MN selecting an appropriate MAP can maximize its location privacy and the number of times that the MAP is changed can be reduced. When the MAP option is delivered to a higher router, a field value of the MAP option can be set in various forms. A form of setting the field value of the MAP option can be applied to a DOMAIN option.

As described above, the present invention has a number of advantageous effects. For example, a mobile node (MN) can select a mobility anchor point (MAP) located on the highest level from among received MAP options, or can select an appropriate MAP by taking into account topology and preference information of MAPs, through dynamic MAP discovery in which distributed MAPs deliver MAP options regardless of a hierarchical structure of routers.

In accordance with the present invention, the number of times that a MAP is changed can be reduced and location privacy serving as a merit of HMIP can be maximized when MAP domain announcement is performed using MAP and DOMAIN options, such that routers outside a MAP domain cannot receive MAP service.

Although preferred embodiments of the present invention have been disclosed for illustrative purposes, those skilled in the art will appreciate that various modifications, additions, and substitutions are possible, without departing from the scope of the present invention. Therefore, the present invention is not limited to the above-described embodiments, but the present invention is defined by the following claims, along with their full scope of equivalents.

## Claims

1. A mobility anchor point (MAP) discovery method in a network system including at least one MAP for managing mobility of a mobile node (MN) and a plurality of routers connected to the at least one MAP in a hierarchical structure, the method comprising:
sending, by the at least one MAP, a MAP option to at least one router located on a higher level than the at least one MAP; and
when the router located on the higher level receives the MAP option, sending an updated MAP option to neighboring routers, after changing a predetermined field value included in the MAP option.

2. The MAP discovery method of claim 1, wherein the field value is an upward value incremented step by step.

3. The MAP discovery method of claim 2, wherein the router receiving the MAP option increments a predetermined distance value representing a relative distance to the at least one MAP by a preset value, and
wherein the router, receiving the MAP option, located on a level equal to or lower than a sender sending the MAP option maintains the upward value.

4. The MAP discovery method of claim 3, wherein the router produces a predetermined path calculation value defined by a difference value between the distance and upward values when receiving a plurality of MAP options from the at least one MAP through different paths.

5. The MAP discovery method of claim 4, wherein the router accepts a MAP option in which the path calculation value is smaller, among the plurality of MAP options.

6. The MAP discovery method of claim 3, wherein the router updates the MAP option by incrementing the distance value by one and maintaining the upward value when receiving the MAP option from a higher layer.

7. The MAP discovery method of claim 3, wherein the router updates the MAP option by incrementing the distance value by one and incrementing the upward value by two, when receiving the MAP option from a lower layer.

8. The MAP discovery method of claim 3, wherein the MAP option is sent through a router advertisement message.

9. A method for managing mobility of a mobile node (MN) in a network system including at least one mobility anchor point (MAP) and a plurality of routers connected to the at least one MAP in a hierarchical structure, comprising the steps of:
sending, by the at least one MAP, a MAP option to at least one router located on a higher level than the at least one MAP;
when the router receives the MAP option from a lower layer, changing a predetermined field value included in the MAP option;
receiving, by the MN, a plurality of updated MAP options sent from the at least one MAP via at least one router;
confirming, by the MN, a hierarchical level of each MAP corresponding to each MAP option using the field value; and
selecting, by the MN, a MAP having a highest hierarchical level.

10. The method of claim 9, wherein the field value is an upward value incremented step by step.

11. The method of claim 10, wherein the router receiving the MAP option increments a predetermined distance value representing a relative distance to the at least one MAP by a preset value, and
wherein the router, receiving the MAP option, located on a level equal to or higher than a sender sending the MAP option maintains the upward value.

12. The method of claim 11, wherein the MN produces a predetermined path calculation value defined by a difference value between the distance and upward values when receiving the plurality of MAP options, the path calculation value determining the hierarchical level.

13. The method of claim 12, further comprising the step of:
selecting, by the MN, a MAP with a smallest distance value from among multiple MAPs, when the multiple MAPs have a largest path calculation value.

14. The method of claim 13, further comprising the step of:
selecting, by the MN, a MAP with a largest preference value from among the multiple MAPs, when the multiple MAPs have the largest path calculation value and the smallest distance value.

15. The method of claim 10, further comprising the step of:
when the selected MAP is equal to a previous MAP, performing, by the MN, a binding update with the previous MAP.

16. The method of claim 10, further comprising the step of:
when the selected MAP is different from a previous MAP, performing, by the MN, a binding update using a MAP option of the selected MAP.

17. The method of claim 10, wherein the steps are performed when the MN moves to a new link.

18. A mobility management system in a network system supporting a mobilc Internet protocol, comprising:
at least one mobility anchor point (MAP) for generating a MAP option and sending the MAP option to a higher level through at least one interface; and
at least one router for receiving the MAP option and sending an updated MAP option to neighboring routers, after changing a predetermined field value included in the MAP option by a preset value, when receiving the MAP option from a lower layer.

19. The mobility management system of claim 18, wherein the field value is an upward value incremented step by step.

20. The mobility management system of claim 19, wherein the router receiving the MAP option increments a predetermined distance value representing a relative distance to the MAP by a preset value, and
wherein the router, receiving the MAP option, located on a level equal to or lower than a sender sending the MAP option maintains the upward value.

21. The mobility management system of claim 20, wherein the router produces a predetermined path calculation value defined by a difference value between the distance and upward values when receiving a plurality of MAP options from a same MAP through different paths, and sets a MAP option with a smallest path calculation value as a MAP option of a corresponding MAP.

22. The mobility management system of claim 19, wherein the MAP option is sent through a router advertisement message.

23. A mobility management system in a network system supporting a mobile Internet protocol, comprising:
at least one mobility anchor point (MAP) for generating a MAP option and sending the MAP option to a higher level through at least one interface;
at least one router for receiving the MAP option and sending an updated MAP option to neighboring routers, after changing a predetermined field value included in the MAP option by a preset value, when receiving the MAP option from a lower layer; and
a mobile node (MN) for receiving a plurality of updated MAP options sent from the at least one MAP via the at least one router, and selecting a MAP having a hierarchical level using the field value.

24. The mobility management system of claim 23, wherein the field value is an upward value incremented step by step.

25. The mobility management system of claim 24, wherein the router receiving the MAP option increments a predetermined distance value representing a relative distance to the MAP by a preset value, and
wherein the router, receiving the MAP option, located on a level equal to or lower than a sender sending the MAP option maintains the upward value to a previous value.

26. The mobility management system of claim 25, wherein the MN produces a predetermined path calculation value defined by a difference value between the distance and upward values when receiving the plurality of MAP options, the path calculation value determining the hierarchical level.

27. The mobility management system of claim 26, wherein the MN selects a MAP with a smallest distance value from among multiple MAPs when the multiple MAPs have a largest path calculation value.

28. The mobility management system of claim 27, wherein the MN selects a MAP with a largest preference value included in a MAP option from among multiple MAPs, when the multiple MAPs have the largest path calculation value and the smallest distance value.

29. The mobility management system of claim 24, wherein the MN performs a binding update to a previous MAP when the selected MAP is equal to the previous MAP.

30. The mobility management system of claim 24, wherein the MN performs a binding update using a MAP option of the selected MAP when the selected MAP is different from a previous MAP.

31. The mobility management system of claim 24, wherein the MN performs MAP selection when moving to a new link.

32. A mobility management method in a network system including at least one mobility anchor point (MAP) and a plurality of routers connected to the at least one MAP in a hierarchical structure, the method comprising:
sending, by the MAP, a DOMAIN option including a predetermined level value indicating a MAP domain to at least one first router located on a higher level than the MAP;
when the at least one first router receives the DOMAIN option from a lower layer, changing a predetermined field value included in the DOMAIN option; and
propagating an updated DOMAIN option including the field value from the at least one first router to at least one second router connected in the hierarchical structure,
wherein the at least one first router and the at least one second router confirm a range of the MAP domain defined by the level value using the Held value.

33. The mobility management method of claim 32, wherein the field value is an upward value incremented step by step.

34. The mobility management method of claim 33, wherein the at least one first router and the at least one second router receiving the DOMAIN option increment a predetermined distance value representing a relative distance to the MAP by a preset value, and
wherein the at least one first router and the at least one second router, receiving the DOMAIN option, located on a level equal to or lower than a sender sending the DOMAIN option maintain the upward value.

35. The mobility management method of claim 33, wherein the at least one first router and the at least one second router produce a predetermined path calculation value defined by a difference value between the distance and upward values when receiving the plurality of MAP options from a same MAP through different paths, and set a DOMAIN option with a smallest path calculation value as a DOMAIN option of a corresponding MAP.

36. The mobility management method of claim 33, wherein the at least one first router and the at least one second router confirm a value of a valid lifetime field included in a message bearing the DOMAIN option and determine if a received message comprises the DOMAIN option.

37. The mobility management method of claim 33, wherein the at least one first router and the at least one second router produce a predetermined domain distance value defined by a value of (Upward value - Distance value + 1).

38. The mobility management method of claim 37, wherein the at least one first router and the at least one second router confirm that it is excluded from the MAP domain when the domain distance value is equal to the level value.

39. The mobility management method of claim 38, wherein the at least one first router and the at least one second router set a preference value of the MAP option, to be delivered to a mobile node (MN), to a smallest value, and send an updated MAP option to at least one neighboring router, when the domain distance value is equal to the level value.

40. The mobility management method of claim 39, wherein the at least one first router and the at least one second router recover a preference value of the MAP option, to be delivered to the MN, to an original value, and send an updated MAP option to at least one neighboring router, when the domain distance value is different from the level value.

41. The mobility management method of claim 39, wherein the DOMAIN option is sent through a router advertisement message.

42. A mobility management system in a network system including at least one mobility anchor point (MAP) and a plurality of routers connected to the at least one MAP in a hierarchical structure, comprising:
at least one MAP for generating a DOMAIN option including a predetermined level value indicating a MAP domain through at least one interface; and
at least one router located on a higher level for confirming a range of the MAP domain defined by the level value using a changed field value when receiving the DOMAIN option from a lower layer, and sending an updated DOMAIN option including the field value to neighboring routers.

43. The mobility management system of claim 42, wherein the field value is an upward value incremented step by step.

44. The mobility management system of claim 43, wherein the at least one router produces a predetermined domain distance value defined by a value of (Upward value - Distance value + 1).

45. The mobility management system of claim 44, wherein the at least one router confirms that it is excluded from the MAP domain when the domain distance value is equal to the level value.

46. The mobility management system of claim 43, wherein the MAP domain can be set in an overlap area when the at least one MAP includes a plurality of MAPs.
